# EUROPEAN PATENT APPLICATION

(11) **EP 4 723 561 A1**
(43) Date of publication of application: **08.04.2026**
(21) Application number: 24838741.7
(22) Date of filing: 05.07.2024
(51) Int. Cl.: H04L 12/18

(54) **TRANSMISSION METHOD, APPARATUS, DEVICE, STORAGE MEDIUM AND PROGRAM PRODUCT**

(30) Priority: 12.07.2023 CN 202310863208
(71) Applicant: Huawei Technologies Co., Ltd., Shenzhen, Guangdong 518129 (CN)
(72) Inventor: ZHANG, Jiayu, Shenzhen, Guangdong 518129 (CN); ZHANG, Han, Shenzhen, Guangdong 518129 (CN); ZHU, Jianjian, Shenzhen, Guangdong 518129 (CN); TONG, Shaojun, Shenzhen, Guangdong 518129 (CN); YUAN, Peng, Shenzhen, Guangdong 518129 (CN)
(74) Representative: Goddar, Heinz J.
(86) International application number: PCT/CN2024/104012
(87) International publication number: WO 2025/011488

(57) **Abstract**

This disclosure provides a transmission method and apparatus, a storage medium, and a program product, and pertains to the field of communication technologies. In the method, when a multicast transmission condition is met, service data is sent in a multicast transmission mode, and retransmission is processed in a unicast transmission mode. The retransmission can effectively reduce a packet loss, improve data transmission reliability, and ensure transmission quality. When the multicast transmission condition is not met, the service data is sent and the retransmission is processed in the unicast transmission mode. This can also effectively reduce the packet loss, improve the data transmission reliability, and ensure the transmission quality. In addition, in this solution, the multicast transmission condition is determined, so that each receive end is controlled to dynamically switch between a reliable multicast mode and a unicast mode. The multicast transmission condition may be properly set, to use advantages of the reliable multicast mode and the unicast mode, thereby reducing a waste of resources.

## Description

This disclosure claims priority to Chinese Patent Application No. 202310863208.5, filed on July 12, 2023 and entitled "TRANSMISSION METHOD AND APPARATUS, DEVICE, AND STORAGE MEDIUM", which is incorporated herein by reference in its entirety.

### TECHNICAL FIELD

This disclosure relates to the field of communication technologies, and in particular, to a transmission method and apparatus, a device, a storage medium, and a program product.

### BACKGROUND

In daily application, a transmit end often sends a same service data stream, for example, a video stream, an audio stream, or a text stream, to a plurality of receive ends. A multicast transmission mode is increasingly used because of advantages of saving processing resources and transmission resources. However, the multicast transmission mode has a problem of poor reliability. Consequently, transmission quality of a data stream is poor.

### SUMMARY

To resolve a related technical problem, this disclosure provides a transmission method and apparatus, a device, a storage medium, and a program product. Technical solutions are as follows.

According to a first aspect, a transmission method is provided. The method is performed by a transmit end, and the transmit end is configured to send a service packet to one or more receive ends. The method includes: When a first receive end meets a multicast transmission condition, the transmit end uses a reliable multicast mode for the first receive end, that is, transmits the service packet to the first receive end in a multicast transmission mode, and transmits a retransmission service packet to the first receive end in a unicast transmission mode; and when the first receive end does not meet the multicast transmission condition, the transmit end uses a unicast mode for the first receive end, that is, transmits the service packet and the retransmission service packet to the first receive end in the unicast transmission mode.

In the solution shown in this disclosure, the transmit end may detect the multicast transmission condition when a service starts, and periodically detect the multicast transmission condition in a service process.

When the service starts, for a receive end that is in a service group and for which the unicast mode is determined to use, the transmit end may separately initiate processing of establishing a unicast connection to each receive end, to perform data transmission in the unicast mode. For receive ends that are in the service group and for which the reliable multicast mode is determined to use, the transmit end may initiate processing of establishing multicast connections to these receive ends, and separately initiate processing of establishing a unicast connection to each receive end, to perform data transmission in the reliable multicast mode.

In the service process, no processing may be performed on a receive end that meets the multicast transmission condition in both a previous period and a current period, or that does not meet the multicast transmission condition in either the previous period or the current period. For a receive end that meets the multicast transmission condition in the previous period and does not meet the multicast transmission condition in the current period, the transmit end switches the transmission mode for the receive end from the reliable multicast mode to the unicast mode. For a receive end that does not meet the multicast transmission condition in the previous period and meets the multicast transmission condition in the current period, the transmit end switches the transmission mode for the receive end from the unicast mode to the reliable multicast mode.

In this way, when the multicast transmission condition is met, service data is sent in the multicast transmission mode, and retransmission is processed in the unicast transmission mode. The retransmission can effectively reduce a packet loss, improve data transmission reliability, and ensure transmission quality. When the multicast transmission condition is not met, the service data is sent and the retransmission is processed in the unicast transmission mode. This can also effectively reduce the packet loss, improve the data transmission reliability, and ensure the transmission quality.

In addition, in this solution, the multicast transmission condition is determined, so that each receive end is controlled to dynamically switch between the reliable multicast mode and the unicast mode. The multicast transmission condition may be properly set, to use advantages of the reliable multicast mode and the unicast mode (for example, in an environment with poor network quality, more resources are saved in the unicast mode than that in the reliable multicast mode, in a case of a large quantity of receive ends, more resources are saved in the reliable multicast mode than that in the unicast mode, and the like), thereby reducing a waste of resources.

In a possible implementation, the multicast transmission condition includes at least one of a network quality condition and a receive end quantity condition.

The network quality condition may include at least one of the following: a packet loss rate of the first receive end is less than a packet loss rate threshold, a transmission delay is less than a delay threshold, and a delay jitter is less than a jitter threshold.

In this way, when network quality of the first receive end is poor, regardless of whether the reliable multicast mode or the unicast mode is used, the transmit end frequently retransmits the packet to the first receive end. In this case, the advantage of the reliable multicast mode in saving network resources and processing resources is weak, and can be basically ignored. However, in comparison with the unicast mode, in the reliable multicast mode, more processing resources and storage resources are wasted to simultaneously maintain a multicast socket and a unicast socket for one receive end, simultaneously maintain a multicast packet sequence number and a unicast packet sequence number, and maintain a correspondence between the two sequence numbers. Therefore, the network quality condition is set, so that the reliable multicast mode can be used when the network quality of the receive end is good, and the unicast mode can be used when the network quality of the receive end is poor. In this way, a waste of resources can be better reduced.

The receive end quantity condition may include that a quantity of receive ends in a service group to which the first receive end belongs is greater than a quantity threshold, or a quantity of receive ends in a service group to which the first receive end belongs is equal to a target value.

In this way, because network resources required by multicast is only 1/n (n is the quantity of receive ends) of network resources required by unicast, when there are a large quantity of receive ends, multicast can be used to save a large quantity of network resources. However, when there are a small quantity of receive ends, network resources that can be saved by using the multicast are limited. In addition, in comparison with the unicast mode, in the reliable multicast mode, more processing resources and storage resources are wasted to simultaneously maintain the multicast socket and the unicast socket for the receive end, simultaneously maintain the multicast packet sequence number and the unicast packet sequence number, and maintain the correspondence between the two sequence numbers. Therefore, the receive end quantity condition is set, so that the reliable multicast mode can be used when the quantity of receive ends is large, and the unicast mode can be used when the quantity of receive ends is small. In this way, the waste of the resources can be better reduced.

In addition, in a case in which there is only one receive end in a system (for example, only one receive end is powered on), the foregoing possible multicast transmission conditions may be used for determining. If the multicast transmission condition includes the receive end quantity condition, it is determined that the receive end does not meet the multicast transmission condition. Alternatively, in the case in which there is only one receive end in the system, unicast transmission may be directly used.

In a possible implementation, when the first receive end meets the multicast transmission condition, the service packet is transmitted to the first receive end according to the UDP protocol, and the retransmission service packet is transmitted to the first receive end according to the TCP protocol. The service group is a device group that receives same service data. When the first receive end does not meet the multicast transmission condition, the service packet and the retransmission service packet is transmitted to the first receive end according to the TCP protocol.

In addition, for the multicast transmission mode, in addition to the UDP protocol, another multicast protocol may be used. For the unicast transmission mode, in addition to the TCP protocol, another reliable unicast protocol may be used, which is not listed one by one herein.

In this way, when the multicast transmission condition is met, the service packet is sent according to the UDP protocol, and retransmission is performed in combination with the TCP protocol, so that resource utilization can be improved while transmission reliability is ensured. When the multicast transmission condition is not met, the service packet is sent according to the TCP protocol, so that resource utilization can also be improved while transmission reliability is ensured.

In a possible implementation, when the first receive end meets the multicast transmission condition, the transmit end sends sequence number mapping information to the first receive end. The sequence number mapping information is used to map a multicast packet sequence number to a unicast packet sequence number in a subsequent transmission process. The transmit end sends, to the first receive end in the multicast transmission mode, a service packet carrying a first multicast packet sequence number. If an acknowledgment packet that is of the service packet and that is sent by the first receive end is not received within specified duration since the service packet is sent, the corresponding retransmission service packet is sent to the first receive end in the unicast transmission mode. The retransmission service packet carries a first unicast packet sequence number, and the first unicast packet sequence number corresponds to the first multicast packet sequence number.

The sequence number mapping information is related to a current second multicast packet sequence number and a second unicast packet sequence number of the first receive end (that is, when it is determined that the multicast transmission condition is met). The pair of sequence numbers, namely, the second multicast packet sequence number and the second unicast packet sequence number, may be directly used as the sequence number mapping information, or the pair of sequence numbers and a calculation relational expression may be used together as the sequence number mapping information. The first unicast packet sequence number may be obtained by mapping the first multicast packet sequence number based on the sequence number mapping information.

In this way, the sequence number mapping information needs to be sent only once when the reliable multicast mode is entered, so that in a subsequent data transmission process in the reliable multicast mode, the receive end and the transmit end can synchronize the multicast packet sequence number and the unicast packet sequence number, and the unicast packet sequence number does not need to be additionally carried each time the service packet is sent in the multicast transmission mode. Therefore, network resource occupation can be reduced.

In a possible implementation, a difference between the first unicast packet sequence number and a second unicast packet sequence number is equal to a difference between the first multicast packet sequence number and a second multicast packet sequence number. The second unicast packet sequence number and the second multicast packet sequence number are respectively a unicast packet sequence number and a multicast packet sequence number that correspond to the first receive end when it is determined that the first receive end meets the multicast transmission condition.

The transmit end may determine, as the second unicast packet sequence number, a sum of the first unicast packet sequence number and the difference between the second multicast packet sequence number and the first multicast packet sequence number.

In this way, a corresponding unicast packet sequence number can be determined simply and quickly based on a current multicast packet sequence number.

In a possible implementation, when the first receive end meets the multicast transmission condition, the transmit end sends a multicast transmission notification to the first receive end. The multicast transmission notification indicates the first receive end to use the reliable multicast mode. When the first receive end does not meet the multicast transmission condition, the transmit end sends a unicast transmission notification to the first receive end. The unicast transmission notification indicates the first receive end to use the unicast mode.

In this way, the transmit end cooperates with the first receive end, to improve the data transmission reliability, ensure the transmission quality, and reduce the waste of the resources.

According to a second aspect, a transmission method is provided. The method is performed by a first receive end, and the first receive end is configured to receive a service packet sent by a transmit end. The method includes: When the first receive end meets a multicast transmission condition, the first receive end uses a reliable multicast mode, that is, receives, in a multicast transmission mode, the service packet sent by the transmit end, and sends, to the transmit end in a unicast transmission mode, an acknowledgment packet corresponding to the service packet. When the first receive end does not meet the multicast transmission condition, the first receive end uses a unicast mode, that is, receives, in the unicast transmission mode, the service packet sent by the transmit end, and sends, to the transmit end in the unicast transmission mode, the acknowledgment packet corresponding to the service packet.

Related processing performed by the receive end to determine the multicast transmission condition is similar to processing performed by the transmit end in the first aspect.

In this way, when the multicast transmission condition is met, service data is sent in the multicast transmission mode, and retransmission is processed in the unicast transmission mode. The retransmission can effectively reduce a packet loss, improve data transmission reliability, and ensure transmission quality. When the multicast transmission condition is not met, the service data is sent and the retransmission is processed in the unicast transmission mode. This can also effectively reduce the packet loss, improve the data transmission reliability, and ensure the transmission quality.

In addition, in this solution, the multicast transmission condition is determined, so that each receive end is controlled to dynamically switch between the reliable multicast mode and the unicast mode. The multicast transmission condition may be properly set, to use advantages of the reliable multicast mode and the unicast mode (for example, in an environment with poor network quality, more resources are saved in the unicast mode than that in the reliable multicast mode, in a case of a large quantity of receive ends, more resources are saved in the reliable multicast mode than that in the unicast mode, and the like), thereby reducing a waste of resources.

In a possible implementation, the multicast transmission condition includes at least one of a network quality condition and a receive end quantity condition.

The network quality condition may include at least one of the following: a packet loss rate of the first receive end is less than a packet loss rate threshold, a transmission delay is less than a delay threshold, and a delay jitter is less than a jitter threshold.

In this way, when network quality of the first receive end is poor, regardless of whether the reliable multicast mode or the unicast mode is used, the transmit end frequently retransmits the packet to the first receive end. In this case, the advantage of the reliable multicast mode in saving network resources and processing resources is weak, and can be basically ignored. However, in comparison with the unicast mode, in the reliable multicast mode, more processing resources and storage resources are wasted to simultaneously maintain a multicast socket and a unicast socket for one receive end, simultaneously maintain a multicast packet sequence number and a unicast packet sequence number, and maintain a correspondence between the two sequence numbers. Therefore, the network quality condition is set, so that the reliable multicast mode can be used when the network quality of the receive end is good, and the unicast mode can be used when the network quality of the receive end is poor. In this way, a waste of resources can be better reduced.

The receive end quantity condition may include that a quantity of receive ends in a service group to which the first receive end belongs is greater than a quantity threshold, or a quantity of receive ends in a service group to which the first receive end belongs is equal to a target value.

In this way, because network resources required by multicast is only 1/n (n is the quantity of receive ends) of network resources required by unicast, when there are a large quantity of receive ends, multicast can be used to save a large quantity of network resources. However, when there are a small quantity of receive ends, network resources that can be saved by using the multicast are limited. In addition, in comparison with the unicast mode, in the reliable multicast mode, more processing resources and storage resources are wasted to simultaneously maintain the multicast socket and the unicast socket for the receive end, simultaneously maintain the multicast packet sequence number and the unicast packet sequence number, and maintain the correspondence between the two sequence numbers. Therefore, the receive end quantity condition is set, so that the reliable multicast mode can be used when the quantity of receive ends is large, and the unicast mode can be used when the quantity of receive ends is small. In this way, the waste of the resources can be better reduced.

In a possible implementation, when the first receive end meets the multicast transmission condition, the first receive end obtains sequence number mapping information from the transmit end. The sequence number mapping information is used to map a multicast packet sequence number to a unicast packet sequence number in a subsequent transmission process. After receiving, in the multicast transmission mode, the service packet sent by the transmit end, the first receive end sends, to the transmit end in the unicast transmission mode, the acknowledgment packet corresponding to the service packet.

The service packet carries a service packet carrying a first multicast packet sequence number. The acknowledgment packet carries a first unicast packet sequence number. The first unicast packet sequence number corresponds to the first multicast packet sequence number. The first unicast packet sequence number may be obtained by mapping the first multicast packet sequence number based on the sequence number mapping information. The first receive end may actively send a message to the transmit end, to request the sequence number mapping information.

In this way, network resource occupation can be reduced.

In a possible implementation, the sequence number mapping information includes a second multicast packet sequence number and a second unicast packet sequence number. The pair of sequence numbers, namely, the second multicast packet sequence number and the second unicast packet sequence number, may be directly used as the sequence number mapping information, or the pair of sequence numbers and a calculation relational expression may be used together as the sequence number mapping information.

In a possible implementation, a difference between the second unicast packet sequence number and the first unicast packet sequence number is equal to a difference between the second multicast packet sequence number and the first multicast packet sequence number.

The first receive end may determine, as the second unicast packet sequence number, a sum of the first unicast packet sequence number and the difference between the second multicast packet sequence number and the first multicast packet sequence number.

In this way, a corresponding unicast packet sequence number can be determined simply and quickly based on a current multicast packet sequence number.

In a possible implementation, when the first receive end meets the multicast transmission condition, the first receive end sends a multicast transmission notification to the transmit end. The multicast transmission notification indicates the transmit end to use the reliable multicast mode for the first receive end. When the first receive end does not meet the multicast transmission condition, the first receive end sends a unicast transmission notification to the transmit end. The unicast transmission notification indicates the transmit end to use the unicast mode for the first receive end.

In this way, the transmit end cooperates with the first receive end, to improve the data transmission reliability, ensure the transmission quality, and reduce the waste of the resources.

According to a third aspect, a transmission apparatus is provided. The apparatus is applied to a transmit end, and is configured to implement the method provided in the first aspect and the possible implementations of the first aspect.

According to a fourth aspect, a transmission apparatus is provided. The apparatus is applied to a first receive end, and is configured to implement the method provided in the second aspect and the possible implementations of the second aspect.

According to a fifth aspect, a computer device is provided. The computer device includes a memory and a processor, and the memory is configured to store computer instructions. The processor executes the computer instructions stored in the memory, so that the computer device performs the method provided in the first aspect, the second aspect, and the possible implementations of the first aspect and the second aspect.

According to a sixth aspect, a computer-readable storage medium is provided. The computer-readable storage medium stores computer program code, and in response to execution of the computer program code by a computer device, the computer device performs the method provided in the first aspect, the second aspect, and the possible implementations of the first aspect and the second aspect.

According to a seventh aspect, a computer program product is provided. The computer program product includes computer program code, and in response to execution of the computer program code by a computer device, the computer device performs the method provided in the first aspect, the second aspect, and the possible implementations of the first aspect and the second aspect.

### BRIEF DESCRIPTION OF DRAWINGS

FIG. 1 is a diagram of a structure of a transmission system according to an embodiment of this application;
FIG. 2 is a diagram of a structure of a computer device according to an embodiment of this application;
FIG. 3 is a flowchart of a transmission method according to an embodiment of this application;
FIG. 4 is a diagram of switching from a reliable multicast mode to a unicast mode according to an embodiment of this application;
FIG. 5 is a diagram of packet sequence number mapping processing in a transmission process according to an embodiment of this application;
FIG. 6 is a flowchart of a transmission method according to an embodiment of this application;
FIG. 7 is a diagram of a structure of a transmission apparatus according to an embodiment of this application; and
FIG. 8 is a diagram of a structure of a transmission apparatus according to an embodiment of this application.

### DESCRIPTION OF EMBODIMENTS

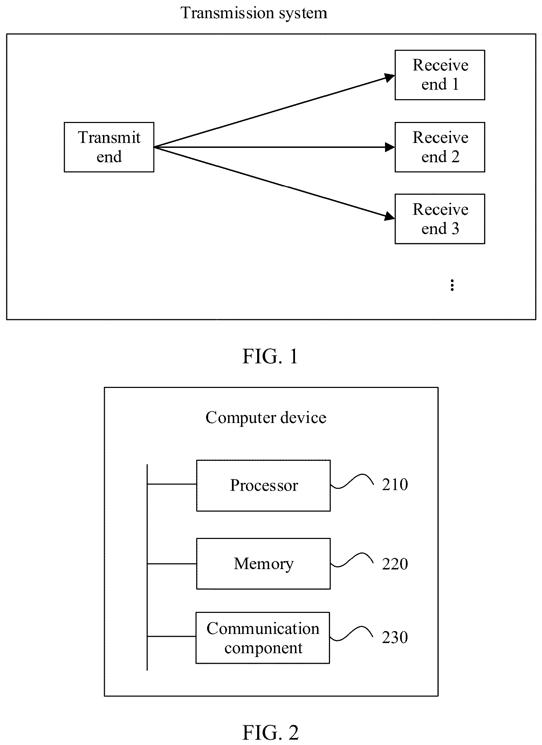

An embodiment of this disclosure provides a transmission method. The method may be applied to a transmission system, and the transmission system includes a transmit end and one or more receive ends, as shown in FIG. 1. In the transmission system, data transmission may be performed through wired communication or wireless communication. In embodiments of this disclosure, wireless communication is used as an example for detailed description of the solution. Other cases are similar, and details are not described again. The transmit end and the receive end may communicate with each other through a routing device, or may not be disposed with a routing device, and communicate with each other through hardware, for example, a wireless network interface card, installed on the transmit end. The transmit end and the receive end may be computer devices such as terminals or servers. The terminal may be a mobile phone, a tablet, a notebook computer, a vehicle-mounted terminal (a central control terminal, a front-passenger terminal, a rear-row terminal, or the like), a smart screen, a desktop computer, a wearable terminal, or the like.

From a perspective of hardware composition, a structure of the computer device (the transmit end or the receive end) may be shown in FIG. 2, and includes a processor 210, a memory 220, and a communication component 230.

The processor 210 may be a central processing unit (central processing unit, CPU), a system on chip (system on chip, SoC), or the like. The processor 210 may be configured to execute various instructions and the like in the method.

The memory 220 may include various volatile memories or non-volatile memories, for example, a solid state disk (solid state disk, SSD) or a dynamic random access memory (dynamic random access memory, DRAM). The memory 220 may be configured to execute pre-stored data, intermediate data, and result data in a service processing process, for example, to-be-transmitted data.

The communication component 230 may be a wired network connector, a wireless fidelity (wireless fidelity, Wi-Fi) module, a Bluetooth module, a honeycomb network communication module, or the like. The communication component may be configured to perform data transmission with another device.

The following explains some terms in embodiments of this disclosure.

Multicast (also referred to as groupcast): A transmit end sends a packet, and the packet can be received by all receive ends that participate in the multicast. This transmission mode is called multicast. A destination address of a multicast packet is a multicast address agreed upon by the transmit end and the receive end, for example, 224.0.1.0. The receive end may determine, upon receiving a packet whose destination address is the multicast address, that the packet is a multicast packet sent to the receive end.

Unicast: A packet sent by a transmit end can be received by only one receive end. This transmission mode is called unicast. A destination address of a unicast packet is an address of the receive end.

Reliable multicast: Reliable multicast is a mode in which unicast and multicast are combined. A packet is sent in a multicast mode and retransmitted in a unicast mode.

Socket (socket): A socket may be considered as a logical interface for data transmission between devices. The device may generally store a socket corresponding to each device that communicates with the device. The socket may be stored in correspondence with information such as an internet protocol (internet protocol, IP) address of a corresponding device. Sockets may be classified into a multicast socket and a unicast socket. When service data is transmitted between the transmit end and the receive end in the multicast transmission mode, the multicast socket may be used. When service data is transmitted between the transmit end and the receive end in the unicast transmission mode, the unicast socket may be used.

Service group: A service group is a device group that receives same service data. For example, if a video stream needs to be simultaneously sent to a plurality of terminals for playing, the plurality of terminals form a device group. In embodiments of this disclosure, the receive end in the transmission system may be a device group. In a related technology, devices in a same service group generally use a multicast transmission mode or a unicast transmission mode. In embodiments of this disclosure, some devices in a same service group may use the multicast transmission mode, and some devices in the same service group may use the unicast transmission mode.

Service packet: Different from a control packet, the service packet is a packet used to transmit service data. The service data may be a media stream, for example, a video stream, an audio stream, or a text stream. Different from the service packet, the control packet is a packet used to transmit a control instruction.

Retransmission service packet: A retransmission packet corresponding to a service packet.

In daily application, a transmit end often simultaneously sends same service data to a plurality of receive ends. The service data may be in various data forms. In embodiments of this disclosure, a service data stream is used as an example, for example, a video stream, an audio stream, or a text stream. For example, inside a vehicle, a central control terminal may send a same video stream to a front-passenger terminal and a rear-row terminal. In this case, the front-passenger terminal and the rear-row terminal form a service group. For another example, in a network conference, a speaker terminal sends an audio stream of a speaker to all conference terminals, and these conference terminals form a service group.

The multicast transmission mode and the unicast transmission mode each have advantages and disadvantages. Resources are saved in the multicast transmission mode, and reliability is high in the unicast transmission mode. Different transmission modes apply to different application scenarios. In a related technology, for a transmission mode of each receive end in a service group, a person skilled in the art may uniformly set the transmission mode to the multicast transmission mode or the unicast transmission mode based on a feature of an application scenario, and the transmission mode remains unchanged in a service process. However, in an actual service process, both a network status and a system status may change dynamically, and statuses of different receive ends may also be different. Therefore, a fixed and unified transmission mode may be unfavorable to transmission at a receive end at a moment.

Embodiments of this disclosure provide a transmission method, so that a transmission mode of each receive end can be separately and dynamically switched in a transmission process of a service data stream. The method may be performed by transport layer plug-ins in system programs of a transmit end and a receive end, or may be performed by hardware such as network interface cards in the transmit end and the receive end. In embodiments of this disclosure, the transport layer plug-in is used as an example for detailed descriptions of the solution. Other cases are similar, and details are not described again.

In the transmission method provided in embodiments of this disclosure, the transmit end or the receive end may perform condition determining, to trigger any receive end to switch between a reliable multicast mode and a unicast mode. Alternatively, condition determining may be performed at both the transmit end and the receive end, and the one who first determines that the condition is met triggers the switching first.

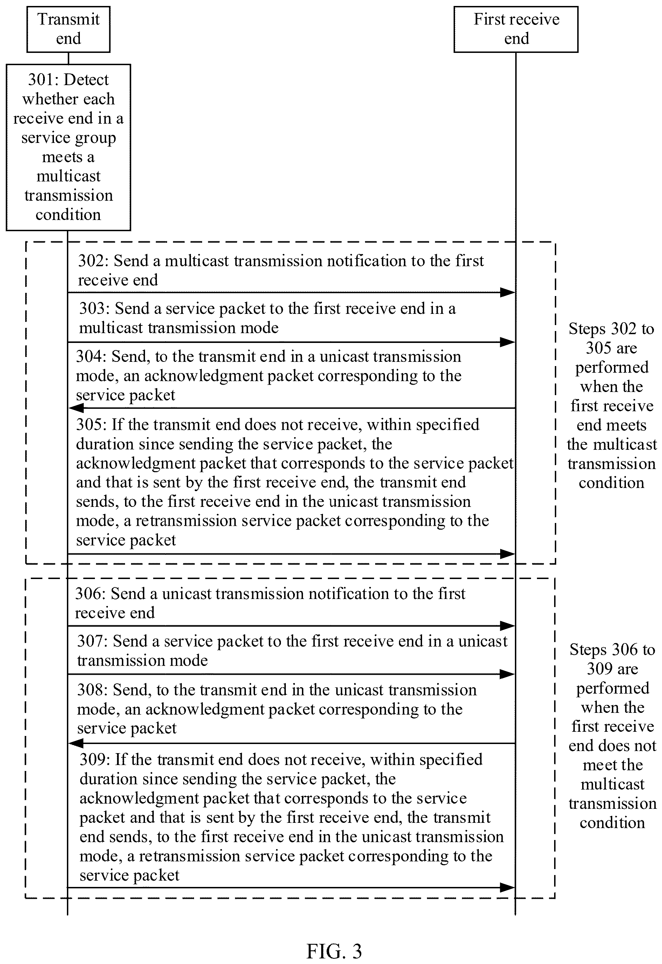

The following describes in detail a processing procedure triggered by the transmit end. As shown in FIG. 3, the following steps are included.

301: The transmit end detects whether each receive end in a service group meets a multicast transmission condition. Steps 302 to 305 are performed when a first receive end meets the multicast transmission condition, and steps 306 to 309 are performed when the first receive end does not meet the multicast transmission condition.

The multicast transmission condition includes a network quality condition and/or a receive end quantity condition. The first receive end is any one of one or more receive ends.

The network quality condition may have a plurality of possible detection parameters, such as a packet loss rate, a transmission delay, and a delay jitter. Correspondingly, the network quality condition may include at least one of the following: A packet loss rate is less than a packet loss rate threshold, a transmission delay is less than a delay threshold, and a delay jitter is less than a jitter threshold.

The receive end quantity condition may be that a quantity of receive ends in the service group to which the first receive end belongs is greater than a quantity threshold, for example, the quantity of receive ends is greater than 2, or may be that a quantity of receive ends in the service group to which the first receive end belongs is equal to a target value, for example, the quantity of receive ends is equal to 1. The quantity threshold may be determined by a person skilled in the art by weighing advantages and disadvantages of unicast and multicast based on experience, or may be determined through experiments.

When executing a service, the transmit end sends a service data stream to each receive end in the service group. In this process, the transmit end may periodically detect whether each receive end in the service group meets the multicast transmission condition. The following description is divided into two stages: service start and service process.

### Service start

First, the transmit end separately establishes unicast connections to all receive ends in the service group, and records a unicast socket corresponding to each receive end. In this process, the receive end also stores corresponding unicast sockets. Then, when the transmit end prepares to start to send the service data stream to the service group, the transmit end may detect whether each receive end (including the first receive end, a second receive end, and the like) in the service group meets the multicast transmission condition, and select a transmission mode based on a determining result. If a receive end meets the multicast transmission condition, a reliable multicast mode may be used. In the reliable multicast mode, a service packet is transmitted in a multicast transmission mode, and retransmission is processed in a unicast transmission mode. If a receive end does not meet the multicast transmission condition, a unicast mode may be used. In the unicast mode, the service packet is transmitted in the unicast transmission mode, and the retransmission is processed in the unicast transmission mode.

For receive ends that are in the service group and for which the reliable multicast mode is determined to use, the transmit end joins a same multicast group with these receive ends based on a locally stored multicast socket (generated or pre-stored when a service starts). The transmit end may further establish a unicast member list corresponding to the multicast socket of the transmit end, and record, in the unicast member list, unicast sockets corresponding to the receive ends. A function of the unicast member list is correspondingly described in a subsequent service packet transmission process.

### Service process

The transmit end starts to communicate with the receive end in the reliable multicast mode and/or the unicast mode, to transmit the service data stream. Subsequently, each time preset period duration elapses, the transmit end may detect again whether each receive end in the service group meets the multicast transmission condition. For a receive end that meets the multicast transmission condition in both a previous period and a current period, or that does not meet the multicast transmission condition in either the previous period or the current period, no processing may be performed.

For a receive end that meets the multicast transmission condition in the previous period and does not meet the multicast transmission condition in the current period, the transmit end switches a transmission mode for the receive end from the reliable multicast mode to the unicast mode. The transmit end deletes a unicast socket of the receive end from the unicast member list. The transmit end continues to perform unicast transmission with the receive end through the unicast socket.

For a receive end that does not meet the multicast transmission condition in the previous period and meets the multicast transmission condition in the current period, the transmit end switches a transmission mode for the receive end from the unicast mode to the reliable multicast mode. The transmit end adds a unicast socket of the receive end to the unicast member list corresponding to the multicast socket.

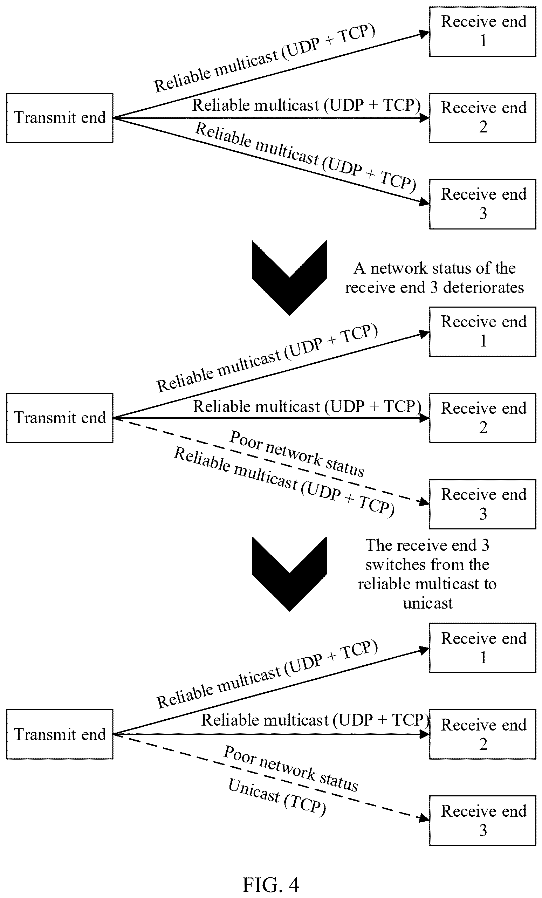

FIG. 4 shows an example of switching from the reliable multicast mode to the unicast mode. In the figure, network quality of a receive end 3 deteriorates, and therefore the reliable multicast mode is switched to the unicast mode for the receive end 3.

In addition, in a case in which there is only one receive end in a system (for example, only one receive end is powered on), the foregoing possible multicast transmission conditions may be used for determining. If the multicast transmission condition includes the receive end quantity condition, it is determined that the receive end does not meet the multicast transmission condition. Alternatively, in the case in which there is only one receive end in the system, unicast transmission may be directly used.

302: The transmit end sends a multicast transmission notification to the first receive end.

When determining that the first receive end meets the multicast transmission condition, the transmit end may send the multicast transmission notification to the first receive end. The multicast transmission notification may be sent in the unicast transmission mode, that is, sent through a first unicast socket corresponding to the first receive end. In embodiments of this disclosure, various control packets are sent in the unicast transmission mode. After receiving the multicast transmission notification, the first receive end joins the multicast group through a locally stored multicast socket (generated when a service starts or pre-stored), simultaneously establishes a unicast member list, and adds a locally stored unicast socket to the unicast member list. In addition, the first receive end may send an acknowledgment packet of the multicast transmission notification to the transmit end through the unicast socket. The acknowledgment packet is also referred to as an acknowledge character (acknowledge character, ACK).

In an optional solution, when entering the reliable multicast mode, the transmit end may establish sequence number mapping information, add the sequence number mapping information to the multicast transmission notification, and send the multicast transmission notification to the receive end. The sequence number mapping information is used to map a multicast packet sequence number to a unicast packet sequence number. The multicast packet sequence number is used for a service packet, and the unicast packet sequence number is used for an acknowledgment packet and a retransmission service packet that correspond to the service packet. In the reliable multicast mode, the multicast packet sequence number is in a one-to-one correspondence with the unicast packet sequence number.

Processing of determining the sequence number mapping information may be as follows.

Step 1: When the first receive end meets the multicast transmission condition, obtain a current first multicast packet sequence number of the multicast socket and a current first unicast packet sequence number of the first unicast socket.

The current first multicast packet sequence number may be a next to-be-used multicast packet sequence number, and the current first unicast packet sequence number may be a next to-be-used unicast packet sequence number.

When both multicast and unicast are just established, the first multicast packet sequence number is an initial first multicast packet sequence number, and the first unicast packet sequence number is an initial first unicast packet sequence number.

When multicast is just established and unicast has been established and used for a period of time, the first multicast packet sequence number is an initial first multicast packet sequence number. In addition, a next unicast packet sequence number of a last used unicast packet sequence number may be determined in sequence, and is used as the first unicast packet sequence number. For example, before the reliable multicast mode is switched to, if the last unicast packet sequence number is 88, the first unicast packet sequence number is 89.

Step 2: Determine the sequence number mapping information based on the first multicast packet sequence number and the first unicast packet sequence number.

The pair of sequence numbers, namely, the first multicast packet sequence number and the first unicast packet sequence number, may be directly used as the sequence number mapping information. Alternatively, the pair of sequence numbers and a calculation relational expression may be used together as the sequence number mapping information. In the former case, the calculation relational expression may be pre-stored in each device in a transmission system, including the transmit end and the receive end. In the latter case, the calculation relational expression only needs to be pre-stored at the transmit end, and the transmit end sends the pair of sequence numbers and the calculation relational expression together to the receive end.

The calculation relational expression may be:
Second unicast packet sequence number = Second multicast packet sequence number - First multicast packet sequence number + First unicast packet sequence number

The second multicast packet sequence number is a real-time multicast packet sequence number in a process of transmitting the service data stream in the reliable multicast mode, and the second unicast packet sequence number is a unicast packet sequence number corresponding to the real-time multicast packet sequence number.

303: The transmit end sends the service packet to the first receive end in the multicast transmission mode.

At the transmit end, an application sends to-be-sent service data (for example, a frame of a video stream) and a corresponding service group identifier to a transport layer plug-in (the foregoing mentioned plug-in configured to perform this method). The service group identifier is in a one-to-one correspondence with the service group.

The transport layer plug-in pre-establishes a correspondence table between a service group identifier and a socket, to search for the socket by using the service group identifier. The correspondence table records each unicast socket and each multicast socket that correspond to each service group, and does not include a unicast member corresponding to the multicast socket. The following Table 1 provides an example of the correspondence table.

**Table 1**

| Service group identifier | Socket |
|---|---|
| S1 | Multicast socket A |
| | Unicast socket B |
| S2 | Multicast socket C |
| S3 | Unicast socket D |
| | Unicast socket E |
| ... | ... |

In receive ends of the service group S1, a part of receive ends use reliable multicast, and the other part of receive ends use unicast. For example, the service group S1 includes receive ends T1, T2, T3, and T4, where T1, T2, and T3 uses the reliable multicast and uses the multicast socket A, and T4 uses the unicast and uses the unicast socket B.

All receive ends of the service group S2 use the reliable multicast, and use the multicast socket C. For example, the service group S2 includes receive ends T5, T6, and T7, where T5, T6, and T7 use the reliable multicast and uses the multicast socket C.

Two receive ends of the service group S3 both use the unicast, and respectively use the unicast socket D and the unicast socket E. For example, the service group S3 includes receive ends T8 and T9, where T8 uses the unicast and uses the unicast socket D, and T9 uses the unicast and uses the unicast socket E.

After receiving the service data and the service group identifier that are sent by the application, the transport layer plug-in may search the correspondence table by using the service group identifier, to determine a socket corresponding to the service group identifier. Further, the transport layer plug-in invokes a transmission function module (configured to perform standardized multicast and unicast transmission) of a system program, and inputs the service data and the found socket. The transmission function module sends the service data in the multicast or unicast mode through the corresponding socket. If the first receive end is set to the reliable multicast mode, the socket found in the table includes at least a multicast socket, and the transmission function module may send the service data through the multicast socket, that is, send the service data in the multicast transmission mode, where the service data is sent to the first receive end. If a second receive end in the service group is further set to the unicast mode, the socket found in the table further includes a unicast socket, and the transmission function module may send the service data through the unicast socket, that is, send the service data to the second receive end in the unicast transmission mode.

The multicast transmission may be performed according to a user datagram protocol (user datagram protocol, UDP), and the unicast transmission may be performed according to a transmission control protocol (transmission control protocol, TCP).

304: After receiving the service packet, the first receive end sends, to the transmit end in the unicast transmission mode, an acknowledgment packet corresponding to the service packet.

After receiving the service packet, the first receive end may send the acknowledgment packet corresponding to the service packet to the transmit end through the locally stored unicast socket.

In addition, the first receive end sends the service data in the service packet to the application for processing. For example, the application may splice the service data into a video frame for video playing.

305: If the transmit end does not receive, within specified duration since sending the service packet, the acknowledgment packet that corresponds to the service packet and that is sent by the first receive end, the transmit end sends, to the first receive end in the unicast transmission mode, the retransmission service packet corresponding to the service packet.

The transmit end may send the retransmission service packet through the first unicast socket.

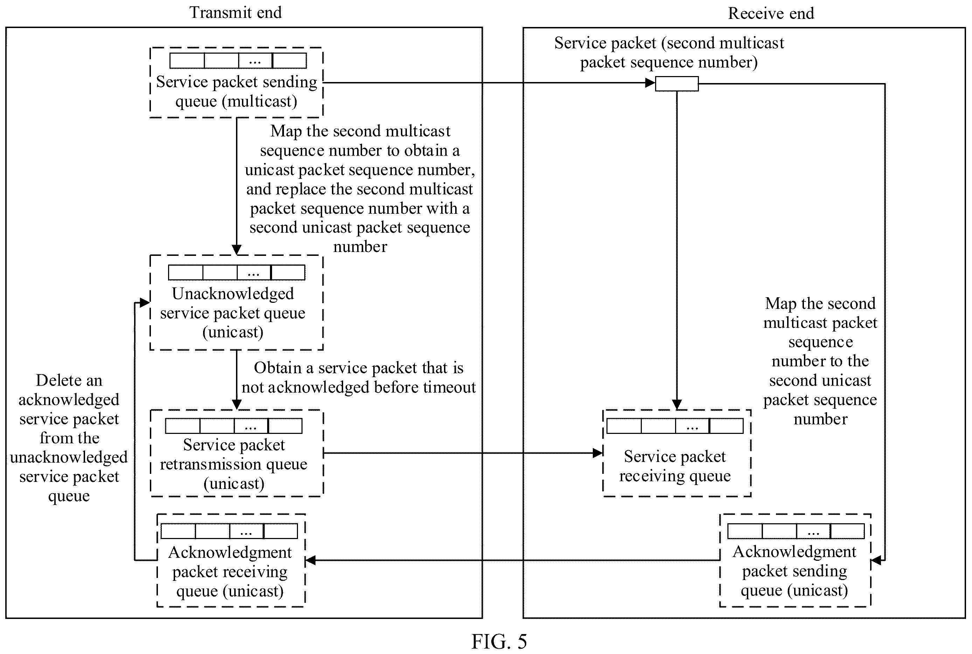

The following describes a specific process of steps 303 to 305 with reference to FIG. 5.

The transmit end sends, to the first receive end through the multicast socket, a service packet carrying the second multicast packet sequence number. The transmit end maps the second multicast packet sequence number based on the sequence number mapping information (specifically, the first multicast packet sequence number, the first unicast packet sequence number, and the second multicast packet sequence number may be substituted into the foregoing calculation relational expression "Second unicast packet sequence number = Second multicast packet sequence number - First multicast packet sequence number + First unicast packet sequence number"), to obtain the second unicast packet sequence number. The transmit end replaces the second multicast packet sequence number in the service packet with the second unicast packet sequence number, to obtain a unicast packet. Further, the unicast packet is added to an unacknowledged packet queue.

The first receive end obtains the second multicast packet sequence number from the received service packet, and maps the second multicast packet sequence number based on the sequence number mapping information previously received from the transmit end, to obtain the second unicast packet sequence number. The acknowledgment packet carrying the second unicast packet sequence number is sent to the transmit end through the locally stored unicast socket.

If the transmit end receives an acknowledgment packet carrying the second unicast packet sequence number, the transmit end deletes, from the unacknowledged packet queue, the unicast packet carrying the second unicast packet sequence number. If the transmit end does not receive, within specified duration since sending the service packet, the acknowledgment packet that is sent by the first receive end and that carries the second unicast packet sequence number, the transmit end obtains, from the unacknowledged packet queue, the unicast packet carrying the second unicast packet sequence number, uses the unicast packet as the retransmission service packet of the service packet, adds the retransmission service packet to a retransmission queue, and then sends the retransmission service packet to the first receive end through the first unicast socket.

306: The transmit end sends a unicast transmission notification to the first receive end.

When the service starts, if the transmit end determines that the first receive end does not meet the multicast transmission condition, the transmit end may send the unicast transmission notification to the first receive end through the first unicast socket. In this case, the unicast transmission notification may not be sent.

In a service process, if the transmit end determines to switch from the reliable multicast mode to the unicast mode for the first receive end, the transmit end may send the unicast transmission notification to the first receive end through the first unicast socket. In this case, the unicast transmission notification may also be referred to as a multicast exit notification. In this case, after receiving the unicast transmission notification, the first receive end may leave the multicast group and remove the corresponding unicast member list.

In addition, after receiving the unicast transmission notification, the first receive end may send an acknowledgment packet of the unicast transmission notification to the transmit end through the stored unicast socket.

307: The transmit end sends a service packet to the first receive end in the unicast transmission mode.

A processing process in this step is similar to the processing in step 303, and a difference lies in that the first receive end is set to the unicast mode. In this case, the socket found by the transmit end in the table includes at least the first unicast socket, and the transmission function module may send the service data through the first unicast socket, that is, send the service data to the first receive end in the unicast transmission mode.

308: After receiving the service packet, the first receive end sends, to the transmit end in the unicast transmission mode, an acknowledgment packet corresponding to the service packet.

After receiving the service packet, the first receive end may send the acknowledgment packet corresponding to the service packet to the transmit end through the locally stored unicast socket.

In addition, the first receive end sends the service data in the service packet to the application for processing.

309: If the transmit end does not receive, within specified duration since sending the service packet, the acknowledgment packet that corresponds to the service packet and that is sent by the first receive end, the transmit end sends, to the first receive end in the unicast transmission mode, the retransmission service packet corresponding to the service packet.

The transmit end may send the retransmission service packet through the first unicast socket.

The maintenance of the correspondence table between the service group identifier and the socket used in the foregoing process is as follows:

When the service starts, for all receive ends in the service group, the transmit end determines the multicast socket of the receive end in the reliable multicast mode and the unicast socket of the receive end in the unicast mode, and correspondingly adds the multicast socket, the unicast socket, and the corresponding service group identifier to the correspondence table. Certainly, only the receive end in the reliable multicast mode or only the receive end in the unicast mode may be included, and only a corresponding multicast socket or unicast socket may be added. Table 1 is used as an example. When a service of the service group S1 has not started, there is no S1, the multicast socket A, or the unicast socket B in Table 1. When the service of the service group S1 starts, S1, the multicast socket A, and the unicast socket B are added to Table 1.

In a service process, in a case, when determining that a receive end in a service group switches from the reliable multicast mode to the unicast mode, the transmit end may add a corresponding unicast socket to sockets corresponding to a corresponding service group identifier in the correspondence table. Table 1 is used as an example. When the receive end T3 in the service group S1 switches from the reliable multicast mode to the unicast mode, a unicast socket F (a unicast socket of the receive end T3) may be added to the sockets corresponding to S1. If a receive end in a reliable multicast mode does not exist in a service group at a moment, a multicast socket corresponding to a corresponding service group identifier may be deleted from the correspondence table. Table 1 is used as an example. When the receive ends T1, T2, and T3 in the service group S1 are all switched from the reliable multicast mode to the unicast mode, the multicast socket A may be deleted.

In another case, when determining that a receive end in a service group switches from the unicast mode to the reliable multicast mode, the transmit end may delete, from the correspondence table, a unicast socket corresponding to the receive end. Table 1 is used as an example. When the receive end T4 in the service group S1 switches from the unicast mode to the reliable multicast mode, the unicast socket B may be deleted. If a new multicast socket needs to be created in the switching process, the multicast socket may be added to sockets corresponding to a corresponding service group identifier in the correspondence table. Table 1 is used as an example. When the receive end T8 in the service group S3 switches from the unicast mode to the reliable multicast mode, a multicast socket G (a newly created multicast socket) may be further added to sockets corresponding to S3 when the unicast socket D is deleted.

Processing at the receive end is similar to that at the transmit end. When the receive end determines to use the reliable multicast mode, the multicast socket and the service group identifier of the transmit end may be correspondingly stored in the correspondence table. When the receive end determines to use the unicast mode, the unicast socket and the service group identifier of the transmit end may be correspondingly stored in the correspondence table. When the reliable multicast mode is switched to the unicast mode, the multicast socket of the transmit end in the table may be replaced with the unicast socket. When the unicast mode is switched to the reliable multicast mode, the unicast socket of the transmit end may be replaced with the multicast socket.

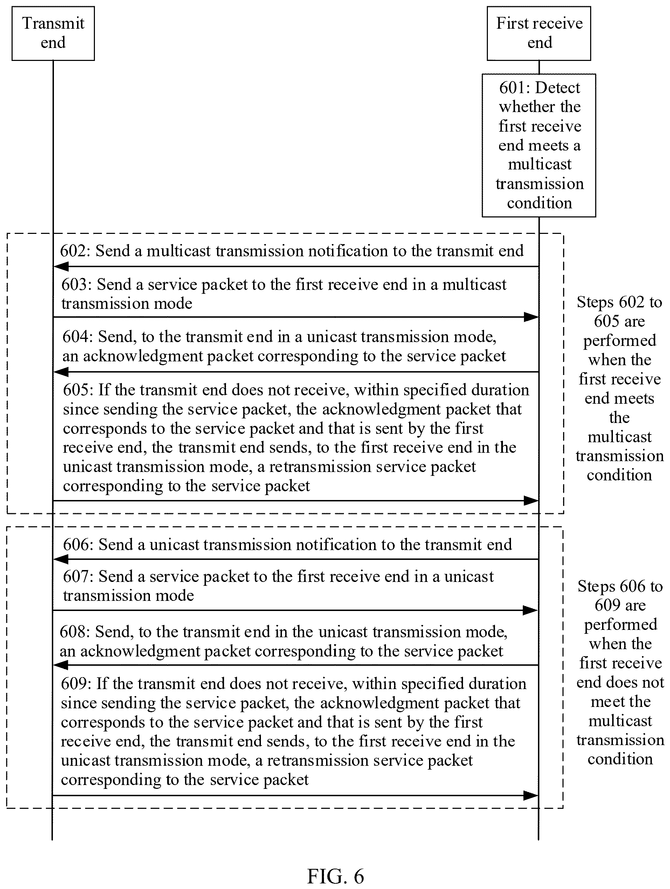

The following describes in detail a processing procedure triggered by the receive end. As shown in FIG. 6, the following steps are included.

601: A first receive end detects whether the first receive end meets a multicast transmission condition. Steps 602 to 605 are performed when the first receive end meets the multicast transmission condition; and steps 606 to 609 are performed when the first receive end does not meet the multicast transmission condition.

Detection processing performed by the receive end on the multicast transmission condition is similar to that performed by the transmit end. For corresponding processing, refer to the description content in step 301. A quantity of receive ends in a service group may be obtained from a transmit end, a packet loss rate may be detected by the receive end or may be obtained from the transmit end, and a quantity of retransmission times in unit duration may be obtained from the transmit end.

602: The first receive end sends a multicast transmission notification to the transmit end.

When a service starts, regardless of whether the multicast transmission condition is detected, the transmit end may initiate processing of establishing unicast connections to all receive ends, to determine a unicast socket corresponding to each receive end. Each receive end also stores a unicast socket. After determining to use the reliable multicast mode, the first receive end may send a multicast transmission notification to the transmit end through the locally stored unicast socket. After determining to use the reliable multicast mode, other receive ends may also send the multicast transmission notification to the transmit end through unicast sockets respectively stored in the other receive ends. The transmit end may send an acknowledgment packet of the multicast transmission notification to these receive ends. For all receive ends that send the multicast transmission notification, the transmit end may add these receive ends to same multicast, and the transmit end and the receive ends separately store a corresponding multicast socket for subsequent multicast transmission. In addition, similar to the processing of the transmit end, each receive end may establish a unicast member list corresponding to the multicast socket of the receive end, and record a locally stored unicast socket in the unicast member list.

In addition, after receiving the multicast transmission notification, the transmit end may determine sequence number mapping information, and send the sequence number mapping information to the receive end that uses the reliable multicast mode. Specific processing of determining the sequence number mapping information is similar to the processing in the foregoing procedure. For details, refer to the description content in step 302. Alternatively, the receive end may request the sequence number mapping information from the transmit end through another message, for example, separately send a mapping information obtaining notification.

603: The transmit end sends a service packet to the first receive end in the multicast transmission mode.

604: After receiving the service packet, the first receive end sends, to the transmit end in the unicast transmission mode, an acknowledgment packet corresponding to the service packet.

605: If the transmit end does not receive, within specified duration since sending the service packet, the acknowledgment packet that corresponds to the service packet and that is sent by the first receive end, the transmit end sends, to the first receive end in the unicast transmission mode, the retransmission service packet corresponding to the service packet.

A processing process of steps 603 to 605 is similar to that of steps 303 to 305. For details, refer to related description content of steps 303 to 305. Details are not described herein again.

606: The first receive end sends a unicast transmission notification to the transmit end.

Based on the description content of step 602, when the service starts, the transmit end establishes the unicast connection to each receive end, and also stores the corresponding unicast socket. After determining to use a unicast mode, the first receive end may send the unicast transmission notification to the transmit end through the locally stored unicast socket. After determining to use the unicast mode, another receive end may also send the unicast transmission notification to the transmit end through a unicast socket stored in the another receive end. The transmit end may send an acknowledgment packet of the unicast transmission notification to a corresponding receive end. For the receive end that sends the unicast transmission notification, the transmit end may record that the unicast mode is used to perform data transmission with the receive end.

607: The transmit end sends a service packet to the first receive end in a unicast transmission mode.

608: After receiving the service packet, the first receive end sends, to the transmit end in the unicast transmission mode, an acknowledgment packet corresponding to the service packet.

609: If the transmit end does not receive, within specified duration since sending the service packet, the acknowledgment packet that corresponds to the service packet and that is sent by the first receive end, the transmit end sends, to the first receive end in the unicast transmission mode, the retransmission service packet corresponding to the service packet.

A processing process of steps 607 to 609 is similar to that of steps 307 to 309. For details, refer to related description content of steps 307 to 309. Details are not described herein again.

That the multicast transmission condition is not met mentioned in the foregoing processing procedures may also be considered as that a unicast transmission condition is met. If the multicast transmission condition is that a packet loss rate is less than a packet loss rate threshold, the corresponding unicast transmission condition may be that a packet loss rate is greater than or equal to a packet loss rate threshold. If the multicast transmission condition is that a quantity of receive ends in a service group is greater than a quantity threshold, the corresponding unicast transmission condition may be that a quantity of receive ends in a service group is less than or equal to a quantity threshold. If the multicast transmission condition is that the packet loss rate is less than the packet loss rate threshold and the quantity of receive ends in the service group is greater than the quantity threshold, the corresponding unicast transmission condition may be that the packet loss rate is greater than or equal to the packet loss rate threshold, or the quantity of receive ends in the service group is less than or equal to the quantity threshold.

According to embodiments of this disclosure, when the multicast transmission condition is met, service data is sent in the multicast transmission mode, and retransmission is processed in the unicast transmission mode. The retransmission can effectively reduce a packet loss, improve data transmission reliability, and ensure transmission quality. When the multicast transmission condition is not met, the service data is sent and the retransmission is processed in the unicast transmission mode. This can also effectively reduce the packet loss, improve the data transmission reliability, and ensure the transmission quality.

In addition, in this solution, the multicast transmission condition is determined, so that each receive end is controlled to dynamically switch between the reliable multicast mode and the unicast mode. The multicast transmission condition may be properly set, to use advantages of the reliable multicast mode and the unicast mode (for example, in an environment with poor network quality, more resources are saved in the unicast mode than that in the reliable multicast mode, in a case of a large quantity of receive ends, more resources are saved in the reliable multicast mode than that in the unicast mode, and the like), thereby reducing a waste of resources.

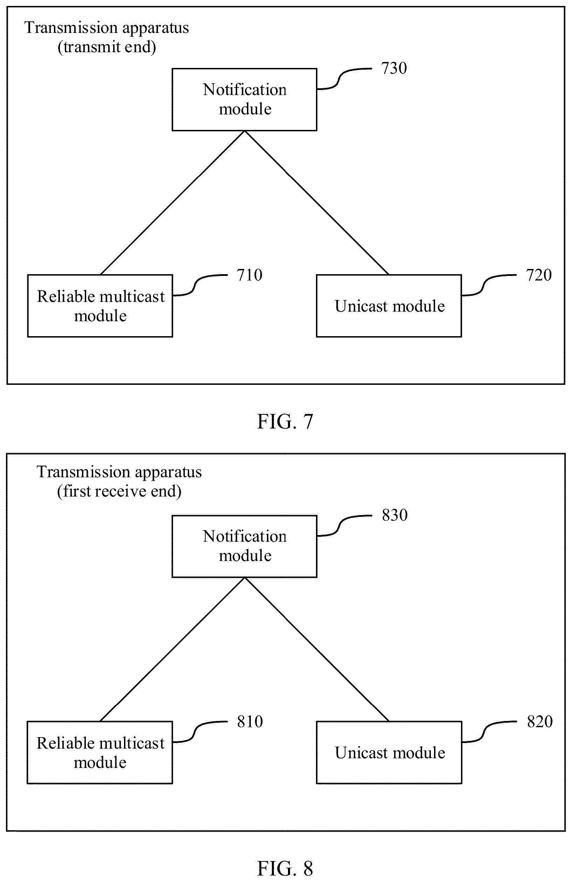

Based on a same technical concept, an embodiment of this disclosure provides a transmission apparatus. The apparatus is used in the transmit end in the foregoing transmission system. As shown in FIG. 7, the apparatus includes:
a reliable multicast module 710, configured to: when a first receive end in one or more receive ends meets a multicast transmission condition, transmit a service packet to the first receive end in a multicast transmission mode, and transmit a retransmission service packet to the first receive end in a unicast transmission mode, where specifically, the processing functions of the foregoing steps 301, 303, 304, and 305 and another implicit step may be implemented; and
a unicast module 720, configured to: when the first receive end does not meet the multicast transmission condition, transmit the service packet and the retransmission service packet to the first receive end in the unicast transmission mode, where specifically, the processing functions of the foregoing steps 301, 307, 308, and 309 and another implicit step may be implemented.

In a possible implementation, the multicast transmission condition includes a network quality condition and/or a receive end quantity condition.

In a possible implementation, the network quality condition includes at least one of the following: a packet loss rate of the first receive end is less than a packet loss rate threshold, a transmission delay is less than a delay threshold, and a delay jitter is less than a jitter threshold.

In a possible implementation, the receive end quantity condition includes that a quantity of receive ends in a service group to which the first receive end belongs is greater than a quantity threshold. The service group is a device group that receives same service data.

In a possible implementation, the reliable multicast module 710 is configured to: transmit the service packet to the first receive end according to a UDP protocol, and transmit the retransmission service packet to the first receive end according to a TCP protocol. The service group is the device group that receives the same service data.

The unicast module 720 is configured to transmit the service packet and the retransmission service packet to the first receive end according to the TCP protocol.

In a possible implementation, the reliable multicast module 710 is further configured to: when the first receive end meets the multicast transmission condition, send sequence number mapping information to the first receive end. The sequence number mapping information is used to map a multicast packet sequence number to a unicast packet sequence number.

The reliable multicast module 710 is configured to: send, to the first receive end in the multicast transmission mode, a service packet carrying a first multicast packet sequence number; and if an acknowledgment packet that is of the service packet and that is sent by the first receive end is not received within specified duration since the service packet is sent, send, to the first receive end in the unicast transmission mode, a retransmission service packet corresponding to the service packet. The retransmission service packet carries a first unicast packet sequence number, and the first unicast packet sequence number corresponds to the first multicast packet sequence number.

In a possible implementation, the reliable multicast module 710 is further configured to: a difference between the first unicast packet sequence number and a second unicast packet sequence number is equal to a difference between the first multicast packet sequence number and a second multicast packet sequence number, and the second unicast packet sequence number and the second multicast packet sequence number are respectively a unicast packet sequence number and a multicast packet sequence number that correspond to the first receive end when it is determined that the first receive end meets the multicast transmission condition.

In a possible implementation, the apparatus further includes a notification module 730, configured to: when the first receive end meets the multicast transmission condition, send a multicast transmission notification to the first receive end, where the multicast transmission notification indicates the first receive end to receive, in the multicast transmission mode, the service packet sent by the transmit end and send, to the transmit end in the unicast transmission mode, the acknowledgment packet corresponding to the service packet; and when the first receive end does not meet the multicast transmission condition, send a unicast transmission notification to the first receive end, where the unicast transmission notification indicates the first receive end to receive, in the unicast transmission mode, the service packet sent by the transmit end and send, to the transmit end in the unicast transmission mode, the acknowledgment packet corresponding to the service packet. Specifically, processing functions of steps 302 and 306 and another implicit step may be implemented.

The reliable multicast module 710, the unicast module 720, and the notification module 730 may be implemented by a processor, or may be implemented by a processor in cooperation with a memory and a communication component.

Based on a same technical concept, an embodiment of this disclosure provides a transmission apparatus. The apparatus is used in the foregoing first receive end. As shown in FIG. 8, the apparatus includes:
a reliable multicast module 810, configured to: when the first receive end meets a multicast transmission condition, receive, in a multicast transmission mode, a service packet sent by a transmit end, and send, to the transmit end in a unicast transmission mode, an acknowledgment packet corresponding to the service packet, where specifically, the processing functions of the foregoing steps 601, 603, 604, and 605 and another implicit step may be implemented; and
a unicast module 820, configured to: when the first receive end does not meet the multicast transmission condition, receive, in the unicast transmission mode, the service packet sent by the transmit end, and send, to the transmit end in the unicast transmission mode, the acknowledgment packet corresponding to the service packet. Specifically, the processing functions of the foregoing steps 601, 607, 608, and 609 and another implicit step may be implemented.

In a possible implementation, the multicast transmission condition includes a network quality condition and/or a receive end quantity condition.

In a possible implementation, the network quality condition includes at least one of the following: a packet loss rate of the first receive end is less than a packet loss rate threshold, a transmission delay is less than a delay threshold, and a delay jitter is less than a jitter threshold.

In a possible implementation, the receive end quantity condition includes that a quantity of receive ends in a service group to which the first receive end belongs is greater than a quantity threshold. The service group is a device group that receives same service data.

In a possible implementation, the reliable multicast module 810 is further configured to: obtain sequence number mapping information from the transmit end. The sequence number mapping information is used to map a multicast packet sequence number to a unicast packet sequence number.

The reliable multicast module 810 is configured to: when the first receive end meets the multicast transmission condition, receive, in the multicast transmission mode, a service packet that is sent by the transmit end and that carries a second multicast packet sequence number; map the second multicast packet sequence number based on the sequence number mapping information, to obtain a second unicast packet sequence number; and send, to the transmit end in the unicast transmission mode, an acknowledgment packet carrying the second unicast packet sequence number.

In a possible implementation, the sequence number mapping information includes the second multicast packet sequence number and the second unicast packet sequence number.

In a possible implementation, the reliable multicast module 810 is configured to: a difference between the second unicast packet sequence number and the first unicast packet sequence number is equal to a difference between the second multicast packet sequence number and the first multicast packet sequence number.

In a possible implementation, the apparatus further includes a notification module 830, configured to: when the first receive end meets the multicast transmission condition, send a multicast transmission notification to the transmit end, where the multicast transmission notification indicates the transmit end to transmit the service packet to the first receive end in the multicast transmission mode and transmit a retransmission service packet to the first receive end in the unicast transmission mode; and when the first receive end does not meet the multicast transmission condition, send a unicast transmission notification to the transmit end, where the unicast transmission notification indicates the transmit end to transmit the service packet and the retransmission service packet to the first receive end in the unicast transmission mode. Specifically, processing functions of steps 602 and 606 and another implicit step may be implemented.

The reliable multicast module 810, the unicast module 820, and the notification module 830 may be implemented by a processor, or may be implemented by a processor in cooperation with a memory and a communication component.

According to embodiments of this disclosure, when the multicast transmission condition is met, service data is sent in the multicast transmission mode, and retransmission is processed in the unicast transmission mode. The retransmission can effectively reduce a packet loss, improve data transmission reliability, and ensure transmission quality. When the multicast transmission condition is not met, the service data is sent and the retransmission is processed in the unicast transmission mode. This can also effectively reduce the packet loss, improve the data transmission reliability, and ensure the transmission quality.

In addition, in this solution, the multicast transmission condition is determined, so that each receive end is controlled to dynamically switch between the reliable multicast mode and the unicast mode. The multicast transmission condition may be properly set, to use advantages of the reliable multicast mode and the unicast mode (for example, in an environment with poor network quality, more resources are saved in the unicast mode than that in the reliable multicast mode, in a case of a large quantity of receive ends, more resources are saved in the reliable multicast mode than that in the unicast mode, and the like), thereby reducing a waste of resources.

When the transmission apparatus provided in the foregoing embodiment performs transmission, division of the foregoing functional modules is merely used as an example for description. In actual application, the foregoing functions can be allocated to different functional modules and implemented based on a requirement, that is, an inner structure of a terminal is divided into different functional modules to implement all or a part of the functions described above. In addition, the transmission apparatus provided in the foregoing embodiments and the transmission method embodiments belong to a same concept. For a specific implementation process of the transmission apparatus, refer to the method embodiments. Details are not described herein again.

An embodiment of this disclosure further provides a computer-readable storage medium. The computer-readable storage medium may be any usable medium that can be stored in a computing device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform a transmission method.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

## Claims

1. A transmission method, wherein the method is performed by a transmit end, the transmit end is configured to send a service packet to one or more receive ends, and the method comprises:
when a first receive end in the one or more receive ends meets a multicast transmission condition, transmitting the service packet to the first receive end in a multicast transmission mode, and transmitting a retransmission service packet to the first receive end in a unicast transmission mode; and
when the first receive end does not meet the multicast transmission condition, transmitting the service packet and the retransmission service packet to the first receive end in the unicast transmission mode.

2. The method according to claim 1, wherein the multicast transmission condition comprises a network quality condition and/or a receive end quantity condition.

3. The method according to claim 2, wherein the network quality condition comprises at least one of the following: a packet loss rate of the first receive end is less than a packet loss rate threshold, a transmission delay is less than a delay threshold, and a delay jitter is less than a jitter threshold.

4. The method according to claim 2 or 3, wherein the receive end quantity condition comprises that a quantity of receive ends in a service group to which the first receive end belongs is greater than a quantity threshold, and the service group is a device group that receives same service data.

5. The method according to any one of claims 1 to 4, wherein transmitting the service packet to the first receive end in the multicast transmission mode, and transmitting the retransmission service packet to the first receive end in the unicast transmission mode comprise:
transmitting the service packet to the first receive end according to a UDP protocol, and transmitting the retransmission service packet to the first receive end according to a TCP protocol, wherein the service group is the device group that receives the same service data; and
transmitting the service packet and the retransmission service packet to the first receive end in the unicast transmission mode comprises:
transmitting the service packet and the retransmission service packet to the first receive end according to the TCP protocol.

6. The method according to any one of claims 1 to 5, wherein the method further comprises:
when the first receive end meets the multicast transmission condition, sending sequence number mapping information to the first receive end, wherein the sequence number mapping information is used to map a multicast packet sequence number to a unicast packet sequence number; and
transmitting the service packet to the first receive end in the multicast transmission mode, and transmitting the retransmission service packet to the first receive end in the unicast transmission mode comprise:
sending, to the first receive end in the multicast transmission mode, a service packet carrying a first multicast packet sequence number; and
if an acknowledgment packet that is of the service packet and that is sent by the first receive end is not received within specified duration since the service packet is sent, sending, to the first receive end in the unicast transmission mode, a retransmission service packet corresponding to the service packet, wherein the retransmission service packet carries a first unicast packet sequence number, and the first unicast packet sequence number corresponds to the first multicast packet sequence number.

7. The method according to claim 6, wherein a difference between the first unicast packet sequence number and a second unicast packet sequence number is equal to a difference between the first multicast packet sequence number and a second multicast packet sequence number, and the second unicast packet sequence number and the second multicast packet sequence number are respectively a unicast packet sequence number and a multicast packet sequence number that correspond to the first receive end when it is determined that the first receive end meets the multicast transmission condition.

8. The method according to any one of claims 1 to 7, wherein the method further comprises:
when the first receive end meets the multicast transmission condition, sending a multicast transmission notification to the first receive end, wherein the multicast transmission notification indicates the first receive end to receive, in the multicast transmission mode, the service packet sent by the transmit end and send, to the transmit end in the unicast transmission mode, the acknowledgment packet corresponding to the service packet; and
when the first receive end does not meet the multicast transmission condition, sending a unicast transmission notification to the first receive end, wherein the unicast transmission notification indicates the first receive end to receive, in the unicast transmission mode, the service packet sent by the transmit end and send, to the transmit end in the unicast transmission mode, the acknowledgment packet corresponding to the service packet.

9. A transmission method, wherein the method is performed by a first receive end, the first receive end is configured to receive a service packet sent by a transmit end, and the method comprises:
when the first receive end meets a multicast transmission condition, receiving, in a multicast transmission mode, the service packet sent by the transmit end, and sending, to the transmit end in a unicast transmission mode, an acknowledgment packet corresponding to the service packet; and
when the first receive end does not meet the multicast transmission condition, receiving, in the unicast transmission mode, the service packet sent by the transmit end, and sending, to the transmit end in the unicast transmission mode, the acknowledgment packet corresponding to the service packet.

10. The method according to claim 9, wherein the multicast transmission condition comprises a network quality condition and/or a receive end quantity condition.

11. The method according to claim 10, wherein the network quality condition comprises at least one of the following: a packet loss rate of the first receive end is less than a packet loss rate threshold, a transmission delay is less than a delay threshold, and a delay jitter is less than a jitter threshold.

12. The method according to claim 10 or 11, wherein the receive end quantity condition comprises that a quantity of receive ends in a service group to which the first receive end belongs is greater than a quantity threshold, and the service group is a device group that receives same service data.

13. The method according to any one of claims 9 to 12, wherein the method further comprises:
obtaining sequence number mapping information from the transmit end, wherein the sequence number mapping information is used to map a multicast packet sequence number to a unicast packet sequence number; and
receiving, in the multicast transmission mode, the service packet sent by the transmit end, and sending, to the transmit end in the unicast transmission mode, the acknowledgment packet corresponding to the service packet comprise:
receiving, in the multicast transmission mode, a service packet that is sent by the transmit end and that carries a first multicast packet sequence number;
mapping the first multicast packet sequence number based on the sequence number mapping information, to obtain a first unicast packet sequence number; and
sending, to the transmit end in the unicast transmission mode, an acknowledgment packet carrying the first unicast packet sequence number.

14. The method according to claim 13, wherein the sequence number mapping information comprises a second multicast packet sequence number and a second unicast packet sequence number.

15. The method according to claim 14, wherein a difference between the second unicast packet sequence number and the first unicast packet sequence number is equal to a difference between the second multicast packet sequence number and the first multicast packet sequence number.

16. The method according to any one of claims 9 to 15, wherein the method further comprises:
when the first receive end meets the multicast transmission condition, sending a multicast transmission notification to the transmit end, wherein the multicast transmission notification indicates the transmit end to transmit the service packet to the first receive end in the multicast transmission mode and transmit a retransmission service packet to the first receive end in the unicast transmission mode; and
when the first receive end does not meet the multicast transmission condition, sending a unicast transmission notification to the transmit end, wherein the unicast transmission notification indicates the transmit end to transmit the service packet and the retransmission service packet to the first receive end in the unicast transmission mode.

17. A transmission apparatus, wherein the apparatus is used in a transmit end, the transmit end is configured to send a service packet to one or more receive ends, and the apparatus comprises:
a reliable multicast module, configured to: when a first receive end in the one or more receive ends meets a multicast transmission condition, transmit the service packet to the first receive end in a multicast transmission mode, and transmit a retransmission service packet to the first receive end in a unicast transmission mode; and
a unicast module, configured to: when the first receive end does not meet the multicast transmission condition, transmit the service packet and the retransmission service packet to the first receive end in the unicast transmission mode.

18. The apparatus according to claim 17, wherein the multicast transmission condition comprises a network quality condition and/or a receive end quantity condition.

19. The apparatus according to claim 18, wherein the network quality condition comprises at least one of the following: a packet loss rate of the first receive end is less than a packet loss rate threshold, a transmission delay is less than a delay threshold, and a delay jitter is less than a jitter threshold.

20. The apparatus according to claim 18 or 19, wherein the receive end quantity condition comprises that a quantity of receive ends in a service group to which the first receive end belongs is greater than a quantity threshold, and the service group is a device group that receives same service data.

21. The apparatus according to any one of claims 17 to 20, wherein the reliable multicast module is configured to:
transmit the service packet to the first receive end according to a UDP protocol, and transmit the retransmission service packet to the first receive end according to a TCP protocol, wherein the service group is the device group that receives the same service data; and
the unicast module is configured to:
transmit the service packet and the retransmission service packet to the first receive end according to the TCP protocol.

22. The apparatus according to any one of claims 17 to 21, wherein the reliable multicast module is further configured to:
when the first receive end meets the multicast transmission condition, send sequence number mapping information to the first receive end, wherein the sequence number mapping information is used to map a multicast packet sequence number to a unicast packet sequence number; and
the reliable multicast module is configured to:
send, to the first receive end in the multicast transmission mode, a service packet carrying a first multicast packet sequence number; and
if an acknowledgment packet that is of the service packet and that is sent by the first receive end is not received within specified duration since the service packet is sent, send, to the first receive end in the unicast transmission mode, a retransmission service packet corresponding to the service packet, wherein the retransmission service packet carries a first unicast packet sequence number, and the first unicast packet sequence number corresponds to the first multicast packet sequence number.

23. The apparatus according to claim 22, wherein a difference between the first unicast packet sequence number and a second unicast packet sequence number is equal to a difference between the first multicast packet sequence number and a second multicast packet sequence number, and the second unicast packet sequence number and the second multicast packet sequence number are respectively a unicast packet sequence number and a multicast packet sequence number that correspond to the first receive end when it is determined that the first receive end meets the multicast transmission condition.

24. The apparatus according to any one of claims 17 to 23, wherein the apparatus further comprises a notification module, configured to:
when the first receive end meets the multicast transmission condition, send a multicast transmission notification to the first receive end, wherein the multicast transmission notification indicates the first receive end to receive, in the multicast transmission mode, the service packet sent by the transmit end and send, to the transmit end in the unicast transmission mode, the acknowledgment packet corresponding to the service packet; and
when the first receive end does not meet the multicast transmission condition, send a unicast transmission notification to the first receive end, wherein the unicast transmission notification indicates the first receive end to receive, in the unicast transmission mode, the service packet sent by the transmit end and send, to the transmit end in the unicast transmission mode, the acknowledgment packet corresponding to the service packet.

25. A transmission apparatus, wherein the apparatus is used in a first receive end, the first receive end is configured to receive a service packet sent by a transmit end, and the apparatus comprises:
a reliable multicast module, configured to: when the first receive end meets a multicast transmission condition, receive, in a multicast transmission mode, the service packet sent by the transmit end, and send, to the transmit end in a unicast transmission mode, an acknowledgment packet corresponding to the service packet; and
a unicast module, configured to: when the first receive end does not meet the multicast transmission condition, receive, in the unicast transmission mode, the service packet sent by the transmit end, and send, to the transmit end in the unicast transmission mode, the acknowledgment packet corresponding to the service packet.

26. The apparatus according to claim 25, wherein the multicast transmission condition comprises a network quality condition and/or a receive end quantity condition.

27. The apparatus according to claim 26, wherein the network quality condition comprises at least one of the following: a packet loss rate of the first receive end is less than a packet loss rate threshold, a transmission delay is less than a delay threshold, and a delay jitter is less than a jitter threshold.

28. The apparatus according to claim 26 or 27, wherein the receive end quantity condition comprises that a quantity of receive ends in a service group to which the first receive end belongs is greater than a quantity threshold, and the service group is a device group that receives same service data.

29. The apparatus according to any one of claims 25 to 28, wherein the reliable multicast module is further configured to:
obtain sequence number mapping information from the transmit end, wherein the sequence number mapping information is used to map a multicast packet sequence number to a unicast packet sequence number; and
the reliable multicast module is configured to:
receive, in the multicast transmission mode, a service packet that is sent by the transmit end and that carries a first multicast packet sequence number;
map the first multicast packet sequence number based on the sequence number mapping information, to obtain a first unicast packet sequence number; and
send, to the transmit end in the unicast transmission mode, an acknowledgment packet carrying the first unicast packet sequence number.

30. The apparatus according to claim 29, wherein the sequence number mapping information comprises a second multicast packet sequence number and a second unicast packet sequence number.

31. The apparatus according to claim 30, wherein a difference between the second unicast packet sequence number and the first unicast packet sequence number is equal to a difference between the second multicast packet sequence number and the first multicast packet sequence number.

32. The apparatus according to any one of claims 25 to 31, wherein the apparatus further comprises a notification module, configured to:
when the first receive end meets the multicast transmission condition, send a multicast transmission notification to the transmit end, wherein the multicast transmission notification indicates the transmit end to transmit the service packet to the first receive end in the multicast transmission mode and transmit a retransmission service packet to the first receive end in the unicast transmission mode; and
when the first receive end does not meet the multicast transmission condition, send a unicast transmission notification to the transmit end, wherein the unicast transmission notification indicates the transmit end to transmit the service packet and the retransmission service packet to the first receive end in the unicast transmission mode.

33. A computer device, wherein the computer device comprises a memory and a processor, and the memory is configured to store computer instructions; and
the processor executes the computer instructions stored in the memory, so that the computer device performs the method according to any one of claims 1 to 16.

34. A computer-readable storage medium, wherein the computer-readable storage medium stores computer program code, and in response to execution of the computer program code by a computer device, the computer device performs the method according to any one of claims 1 to 16.

35. A computer program product, wherein the computer program product comprises computer program code, and in response to execution of the computer program code by a computer device, the computer device performs the method according to any one of claims 1 to 16.
